# EUROPEAN PATENT APPLICATION

(11) **EP 1 692 945 A2**
(43) Date of publication of application: **23.08.2006**
(21) Application number: 06100470.1
(22) Date of filing: 17.01.2006
(51) Int. Cl.: A23G 9/28, A23G 9/04, A23G 9/22

(54) **A dispenser for ice drinks and the like**

(30) Priority: 31.01.2005 IT BO20050005 U
(71) Applicant: Ali SpA, 20123 Milano (IT)
(72) Inventor: Cocchi, Gino, 40137, BOLOGNA (IT); Vannini, Antonio, 40038, VERGATO (Bologna) (IT)
(74) Representative: Ghioni, Carlo Raoul Maria

(57) **Abstract**

The dispenser (1) for ice drinks and the like comprises a tank (2) for containing the drink, and having a respective outlet hole (4) and a dispensing tap (5) in fluid communication with the outlet hole (4); the dispensing tap (5) comprises a tubular conduit (14) leading to the hole (4) and a plunger (7) that slides along an axis (B) inside the tubular conduit (14) comprising a downwardly extended portion (11) whose transversal dimension along its full length is at least greater than that of the portion (10) of the tubular conduit (14) and in which the plunger (7) does not slide as it moves along the axis (B).

## Description

This invention relates to a dispenser for ice drinks such as granitas, sorbets and the like.

In particular, the invention relates to a dispenser comprising an ice drink tank and a dispensing tap.

Dispensers of this type often include a device for mixing the drink ingredients and comprising stirring means, for example of the screw type.

Ice drink dispensers are normally fitted with a dispensing tap located in the vicinity of a drainage hole made in the tank that contains the drink. The tap comprises a cylindrical plunger that slides in a cylindrical conduit just a little larger in diameter than the plunger.

Basically, the plunger constitutes a gate valve which, under the force applied to it both by gravity and by the pushing action of the stirring means, stops the drink from flowing out. The plunger protrudes from the above mentioned drainage hole and is actuated by an external control lever that acts on opposing spring elements which tend to push the plunger back into its closed position.

Since the drink is iced, blocks of ice clogging the drainage hole or preventing the drink from flowing properly out of it may form.

When this happens, the operator using the dispenser is prompted by instinct to put a finger in the drainage hole to mechanically clear it and restore the flow of ice drink.

This may have serious consequences for operators not only because their fingers may come into contact with the rotating screw stirrer but also as a result of the plunger being suddenly released and springing back into the closed position.

Injury to operators during normal use of prior art dispensers of this kind is thus a real possibility and constitutes a serious drawback to their use.

The aim of this invention is therefore to overcome the above mentioned drawback by providing an ice drink dispenser that is effective, practical and safe to use.

The technical characteristics of the invention according to the aforementioned aim may be easily inferred from the contents of the appended claims, especially claim 1, and preferably any of the claims that depend, either directly or indirectly, on claim 1.

Moreover, the advantages of the invention are apparent from the detailed description which follows, with reference to the accompanying drawings which illustrate a preferred embodiment of the invention provided merely by way of example without restricting the scope of the inventive concept, and in which:
- Figure 1 is a schematic side elevation view of an ice drink dispenser according to the present invention;
- Figure 2 is a perspective view from above of a part of the dispenser of Figure 1;
- Figure 3 is a perspective view from a different angle of the dispenser of Figure 1 in a different operating stage;
- Figure 4 is a view in cross section and with some parts cut away for clarity, of a part of the dispenser shown in the figures listed above.

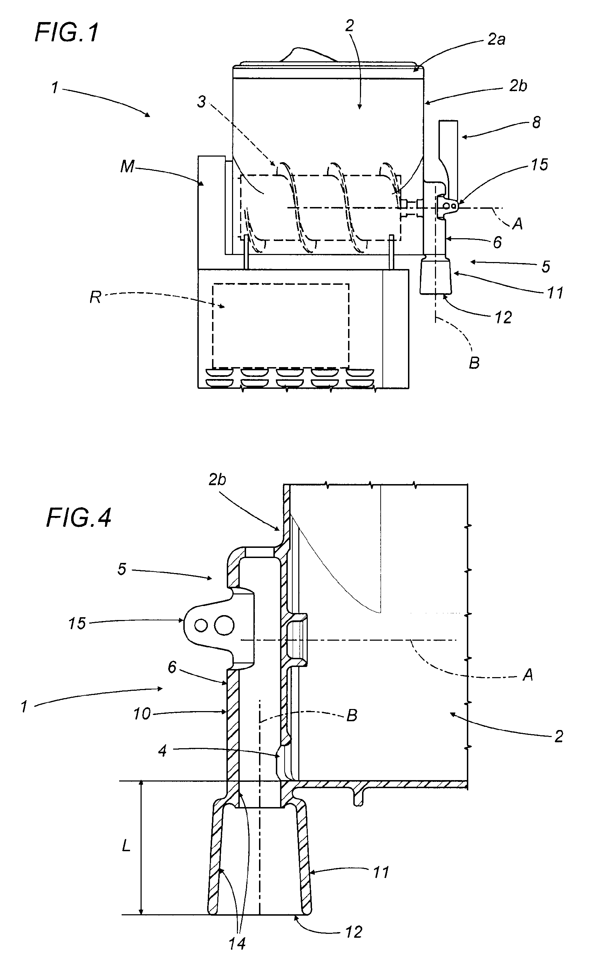

With reference to the accompanying drawings, in particular, Figure 1, the reference numeral 1 denotes a dispenser for ice drinks and the like, which are not illustrated.

The dispenser 1 comprises a tank 2 which is designed to contain the drink and which is normally made of transparent glass or plastic and has a lid 2a covering the top of it.

The dispenser 1 also comprises, associated with the tank 2, a customary unit for cooling the drink, schematically illustrated in Figure 1 as a block R drawn in dashed line style, and stirring means M comprising a screw 3 for stirring the drink.

At least in the part of it that houses the screw 3, the tank 2 is substantially cylindrical in shape and has a drink drainage hole 4 made in an end face of it 2b.

The screw 3 is designed to rotate about an axis of rotation A which also constitutes a central axis of the cylindrical portion of the tank 2.

On the above mentioned end face 2b there is mounted a dispensing tap 5 that is in fluid communication with the drainage hole 4.

The dispensing tap 5 comprises a tubular element 6 extending lengthways along an axis B.

The tap 5 also comprises a plunger 7 for closing the hole 4, a lever 8 for actuating the plunger and a spring element 9 for opposing the movement of the plunger 7.

The tubular element 6 comprises an upper portion 10 and a lower, downwardly extended portion 11 which are connected to each other. At the lower end of it, the extended portion 11 has an outlet opening 12 through which the drink can flow out.

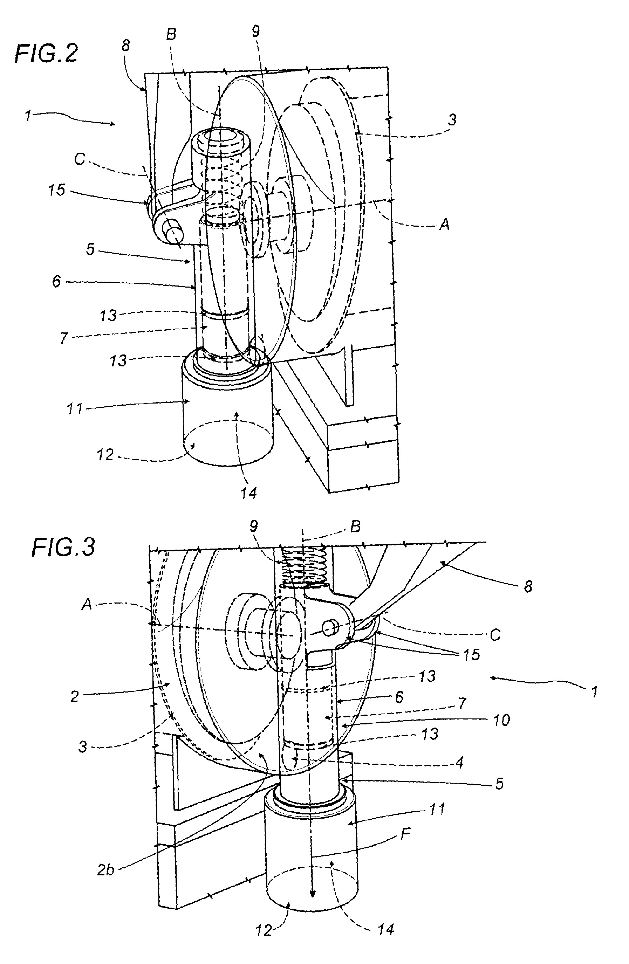

The plunger 7 is positioned inside the upper portion 10 of the tubular element 6 and slides along the above mentioned longitudinal axis B between a first, lowered position, illustrated in Figure 2, in which it closes the drainage hole 4 in the tank 2, and a second, raised position, illustrated in Figure 3, in which it leaves the hole 4 open.

As shown in Figure 3 and according to prior art, the plunger 7 has two scraper rings 13 spaced from each other along the axis B.

With reference to Figure 4, the lower extension 11 and the upper portion 10 of the tubular element 6 form, with their inside surfaces, a tubular conduit 14 leading to the hole 4.

The extended portion 11 has a transversal dimension that is greater than that of the upper portion 10, said upper portion 10 being, in practice, the part of the tubular conduit 14 in which the plunger 7 slides. The term "transversal dimension" is used to mean the length of any cross section of the conduit 14 obtained by intersecting the conduit 14 itself with a plane perpendicular to its axis B.

As illustrated in Figure 4, between the outlet 12 of the extended portion 11 and the lower edge of the hole 4, there is a distance L measured along the axis B of the tubular element 6.

In preferred embodiments of the invention, the distance L is between 50 and 90 millimetres and is never less than the average length of a finger of a man's hand.

Advantageously, but without restricting the scope of the invention, the distance L is approximately 70 millimetres.

The actuating lever 8 is pivoted on respective protrusions 15 made on the tubular element 6 to rotate about an axis C transversal to both the aforementioned axes A and B.

The actuating lever 8 is of substantially known type and is therefore not illustrated in detail nor its structural and functional characteristics described at length.

With reference to the accompanying drawings, the lower, downwardly extended portion 11 is substantially in the shape of a truncated cone.

In other embodiments of the invention which are not illustrated, the lower, downwardly extended portion 11 may have a different shape, for example, cylindrical.

With reference to the accompanying drawings, the lower, downwardly extended portion 11 is permanently connected to the upper portion 10 and, advantageously, the two are made as a single part.

In other embodiments of the invention which are not illustrated, the lower, downwardly extended portion 11 is removably connected to the upper portion 10, for example by a threaded or pressure coupling.

During use, assuming that the tank 2 contains a certain quantity of drink, when the actuating lever 8 is operated by hand, the plunger 7 moves from its first, lowered position, illustrated in Figure 2, to its raised position, illustrated in Figure 3.

When it is in the second, raised position, a flow F of drink out of the hole 4 and through a portion of the tubular conduit 14 is formed in a substantially known manner.

It will be appreciated that the lower, downwardly extended portion 11 prevents accidents by making it very difficult for operators to injure their fingers since the distance L between the outlet opening 12 and the drainage hole 4 greatly reduces the possibility of an operator inserting a finger into the hole 4.

Advantageously, the fact that the transversal dimension of the lower, downwardly extended portion 11 is larger than that of the other parts of the conduit 14 means that it is very difficult for the ice drink to form blocks of ice large enough to stop or otherwise reduce the outflow of drink.

Further and equally advantageously, thanks to this feature, the drink flow F coming out of the dispensing tap 5 remains clear of the inside surface of the extended portion 11, thus preventing the drink from forming deposits that might easily deteriorate and would thus contravene the strict hygiene standards required for machines of this kind.

The invention described has evident industrial applications and can be modified and adapted in several ways without thereby departing from the scope of the inventive concept. Moreover, all the details of the invention may be substituted by technically equivalent elements.

## Claims

1. A dispenser for ice drinks and the like comprising a tank (2) for containing the drink, and having a respective outlet hole (4) and a dispensing tap (5) in fluid communication with the outlet hole (4); the dispensing tap (5) comprising a tubular conduit (14) leading to the hole (4) and extending mainly along an axis (B) and a plunger (7) that slides along the axis (B) inside the tubular conduit (14) at least between a first, lowered position in which it stops the outflow of the drink, and a second, raised position in which it allows drink to flow out, the dispenser being **characterised in that** the tubular conduit (14) comprises a lower, downwardly extended portion (11) through which the drink flows, the plunger (7) not sliding in the extended portion (11).

2. The dispenser according to claim 1, **characterised in that** the lower, downwardly extended portion (11) has a transversal dimension that, along its full length, is at least greater than that of the upper portion (10) of the tubular conduit (14) in which the plunger (7) slides.

3. The dispenser according to claim 1 or 2, **characterised in that** the lower, downwardly extended portion (11) is removably connected to the upper portion (10) of the tubular conduit (14) in which the plunger (7) slides.

4. The dispenser according to claim 1 or 2, **characterised in that** the lower, downwardly extended portion (11) is permanently connected to the upper portion (10) of the tubular conduit (14) in which the plunger (7) slides.

5. The dispenser according to any of the foregoing claims from 1 to 4, **characterised in that** the lower, downwardly extended portion (11) is substantially in the shape of a truncated cone.

6. The dispenser according to any of the foregoing claims from 1 to 4, **characterised in that** the lower, downwardly extended portion (11) is substantially cylindrical in shape.

7. The dispenser according to any of the foregoing claims from 1 to 6, where the lower, downwardly extended portion comprises an outlet opening (12) located at a distance (L) from the hole (4), **characterised in that** the distance (L) is not less than the average length of a finger of a man's hand.

8. The dispenser according to claim 7, **characterised in that** the distance (L) is between 50 and 90 millimetres.

9. The dispenser according to claim 8, **characterised in that** the distance (L) is approximately 70 millimetres.
